# FASCICULE DE BREVET EUROPEEN

(11) **EP 3 852 968 B1**
(45) Date de publication et mention de la délivrance du brevet: **09.04.2025**
(21) Numéro de dépôt: 19780159.0
(22) Date de dépôt: 16.09.2019
(51) Int. Cl.: B23K 37/04, B23K 13/01, E01B 29/46

(54) **SYSTÈME D'ALIGNEMENT DE PORTIONS DE RAIL POUR SOUDEUSE À INDUCTION**
SYSTEM ZUM AUSRICHTEN VON SCHIENENABSCHNITTEN FÜR EINE INDUKTIONSSCHWEISSEINHEIT
SYSTEM FOR ALIGNING RAIL PORTIONS FOR AN INDUCTION WELDING UNIT

(30) Priorité: 17.09.2018 FR 1858343
(43) Date de publication de la demande: 28.07.2021
(73) Titulaire: Mornac, Jean-Pierre, 03000 Moulins (FR)
(72) Inventeur: RADFORD, Peter, STOKE-ON-TRENT Staffordshire ST4 6DA (GB); MORNAC, Jean-Pierre, 03000 Moulins (FR)
(74) Mandataire: Ernest Gutmann - Yves Plasseraud S.A.S.
(86) Numéro de dépôt international: PCT/EP2019/074741
(87) Numéro de publication internationale: WO 2020/058208

(56) Documents cités:
- EP-A1- 1 731 673
- WO-A1-2010/015309
- FR-A1- 2 998 310
- GB-A- 2 551 394

## Description

### DOMAINE

La présente invention concerne un système et un procédé d'alignement dans le cadre de la soudure de rails ferroviaires. L'invention concerne en outre, de manière générale, la soudure de rails ferroviaires par induction.

### CONTEXTE

Dans le cadre de la pose de nouvelles voies, de la maintenance des voies ferroviaires, ou de la réalisation de portions de rails en atelier, des soudeuses sont utilisées pour souder des portions de rails afin de réaliser un rail soudé continu. La qualité de la soudure des portions de rails, aussi appelé joint de rails, est ressentie par les passagers, en particulier lors du passage d'un véhicule ferroviaire, où une mauvaise soudure se traduit par un léger choc par exemple. Cela se révèle d'autant plus important pour les voies ferroviaires destinées aux véhicules ferroviaires à grandes vitesses, notamment au regard des risques de déraillement.

La soudure peut être réalisée en pleine voie, lors de la maintenance des voies ferrées, ou en atelier, lors de la confection des longs rails soudés (LRS), de plus en plus utilisés dans la pose de voies ferrées afin de réduire la plupart des joints de rails sur des longueurs importantes.

Ainsi, il s'avère avantageux, lors de maintenance des rails en pleine voie, d'avoir un appareil de soudure transportable, et intégrant l'ensemble des fonctions nécessaires pour assurer une bonne soudure de rails.

Pour éviter les défauts de soudure au niveau du joint de rail, il est nécessaire de porter un intérêt particulier aux points suivants :
- l'alignement de deux portions de rails à souder ;
- le contrôle de la largeur du joint de rails ;
- le maintien des rails lors de l'opération de soudage ;
- L'ébavurage après forgeage,
- le meulage.

Concernant le deuxième et troisième points, un système communément appelé « *rail puller »* en anglais, est utilisé afin de rapprocher deux extrémités de deux portions de rails et de les mettre en tension. Ce type de système comprend généralement des vérins reliés à des moyens de serrage rotatif reliés aux extrémités du vérin. L'actionnement des vérins permet un serrage de chaque rail tout en les mettant en contact l'un avec l'autre. L'intérêt d'un tel système est de réaliser simultanément le serrage et la mise en tension, la force des moyens de serrage étant démultipliée par la liaison des moyens de serrage aux vérins. A titre d'exemple un vérin pouvant exercer une force de 100 tonnes peut conduire à un serrage de plus de 250 tonnes sur chaque portion de rail. L'utilisation d'une règle par les opérateurs permet d'assurer le bon alignement des portions de rails mais s'avère en pratique peu précise.

La qualité de la soudure dépend également de la technique de soudage utilisée. Les méthodes actuelles de soudage présentent des limites sur le plan sanitaire, environnemental et de la sureté d'utilisation.

Par exemple, le soudage de type Thermit ^{®}, basé sur aluminothermie, consiste en une réduction exothermique d'un oxyde métallique (en général de fer) par de la poudre d'aluminium. Néanmoins, la soudure de fer obtenue reste plus fragile que le corps de rails des portions de rails, le préchauffage par une flamme est dangereux pour les opérateurs, la réaction exothermique de l'aluminothermie peut s'avérer explosive en cas de contact avec de l'eau.

Dans le cas de la technique de soudage par arc électrique, connu en anglais sous le nom de « *Flash butt welding »,* les portions de rails subissent de fortes contraintes hydrauliques répétées selon l'axe d'alignement des portions de rails, et un arc électrique est formé entre les deux extrémités à souder. Néanmoins, le soudage par arc électrique entraine un alignement approximatif (difficilement maitrisable lors du processus de soudage), et reste risqué sur le plan sécuritaire. Les systèmes de type « puller » décrits ci-dessus, sont inadaptés puisqu'il ne permettent pas des mouvements de coulissement dans un sens et dans l'autre selon la direction longitudinale. Ainsi, le serrage de chaque portion de rail est réalisé par un vérin indépendant de sorte que chaque vérin doit être apte à réaliser un serrage important et de l'ordre de 250 tonnes permettant d'assurer une prise parfaite de la portion de rail. Le déplacement des portions de rail en coulissement est alors réalisé par un ou des vérins additionnels (qui font partie en général d'une tête de soudeuse qui est insérée dans le système type « puller » en lieu et place de la soudure aluminothermique). On comprend ainsi qu'un tel système est lourd et encombrant et dès lors difficilement déplaçable en voie.

Il est important de noter que la qualité métallurgique et mécanique des soudures de type « *flash butt »* est de meilleure qualité que les soudures de type aluminothermiques. Cependant, ces soudures présentent des limites qui sont de moins en moins acceptables au regard du niveau d'exigence des réseaux ferroviaires à ce jour.

Un système destiné à être utilisé pour la soudure d'une extrémité d'une première portion de rail avec une extrémité d'une seconde portion de rail est connu du document WO2010/015309.

De plus, il n'existe pas véritablement aujourd'hui de soudeuse intégrant l'ensemble des moyens nécessaires à assurer le bon alignement des portions de rails, mais également le maintien statique des rails. En particulier, il n'existe pas de système réduisant l'intervention humaine à l'installation de la soudeuse au niveau des extrémités des portions de rails à souder afin d'accélérer le processus de soudure de rails.

Ainsi, il est donc nécessaire de proposer un procédé plus performant sur le plan métallurgique et d'y associer une cinématique d'un système mécanique permettant d'obtenir une bonne qualité et répétabilité des soudures. Egalement, il apparait nécessaire d'investiguer le développement d'une soudeuse permettant de réaliser la soudure de portions de rails, tout en contrôlant et réalisant un parfait alignement des portions de rails et en limitant les interventions des opérateurs lors du processus de soudage afin de rendre ce processus fiable sur le plan sécuritaire.

### RESUME DE L'INVENTION

A cet effet, il est tout d'abord proposé un système destiné à être utilisé pour la soudure d'une extrémité d'une première portion de rail avec une extrémité d'une seconde portion de rail, la première portion de rail s'étendant selon un premier axe et la seconde portion de rail s'étendant selon un second axe, le système comprenant :
- un premier châssis et un deuxième châssis ;
- des moyens de liaison à glissement du premier châssis avec le deuxième châssis selon un axe longitudinal d'extension desdites deux portions de rail selon lequel le premier axe et le second axe sont destinés à être alignés l'un avec l'autre et avec l'axe longitudinal ;
- des premiers moyens de serrage de la première portion de rail portés par le premier châssis et configurés pour établir au moins une position libre et au moins une position de serrage de la première portion de rail ;
- des seconds moyens de serrage de la seconde portion de rail portés par le deuxième châssis et configurés pour établir au moins une position libre et au moins une position de serrage de la seconde portion de rail ;
- des moyens de sollicitation des extrémités des portions de rail l'une sur l'autre, lesdits moyens de sollicitation étant reliés au premier châssis par l'intermédiaire des premiers moyens de serrage et au deuxième châssis par l'intermédiaire des seconds moyens de serrage de manière à ce que l'actionnement des moyens de sollicitation induisent un serrage de la première portion de rail par les premiers moyens de serrage et un serrage de la seconde portion de rail par les seconds moyens de serrage ;
des premiers moyens d'alignement du premier axe de la première portion de rail selon l'axe longitudinal portés par le premier châssis et des seconds moyens d'alignement du second axe de la seconde portion de rail selon l'axe longitudinal portés par le deuxième châssis.

Un tel système permet d'assurer trois fonctions indispensables à l'alignement de deux portions de rails en vue de leur soudage, assurées dans l'art antérieur indépendamment les unes des autres par des dispositifs distincts.

Ainsi, les moyens de serrage couplés aux moyens de sollicitation, permettent de transmettre un effort aux portions de rails de manière à les rapprocher. Les premier et deuxième châssis, reliés par les moyens de glissement, portant les moyens de serrage, sont ainsi adaptés pour suivre les mouvements des moyens de sollicitation, ces derniers leurs transmettant le mouvement auquel sont soumis les portions de rails. Les premier et deuxièmes châssis, dont le positionnement vertical est fixe par rapport aux deux portions de rails à souder, porte les moyens d'alignement des portions de rails, assurant ainsi le bon alignement des axes, selon lesquels les portions de rails s'étendent, avec l'axe longitudinal du système.

Un tel système permet donc, une fois positionné au-dessus des deux portions de rails, d'aligner les deux portions de rails, sans intervention supplémentaire des opérateurs, pour assurer l'alignement des portions de rails lors des opérations de soudage.

La liaison des moyens de serrage avec les moyens de sollicitation permet en outre au système d'assurer le serrage des portions de rails, par le biais de ces moyens de sollicitation, ces derniers permettant également de rapprocher les portions de rails en vue de leur soudage et de mettre en contact et solliciter les extrémités des rails l'une contre l'autre.

Avec un tel système de double châssis portant les moyens d'alignement, celui-ci peut facilement être intégré à une soudeuse, dont le module de soudure peut être relié directement ou indirectement par le biais d'un troisième châssis à l'ensemble comprenant les premier et deuxième châssis reliés par les moyens de liaison à glissement. Par conséquent avec un tel système, chaque châssis assure une référence de positionnement pour les modules d'alignement mais également pour l'éventuel module de soudure.

Selon l'invention, les moyens de sollicitation comprennent un premier actionneur linéaire et un second actionneur linéaire chacun reliés aux premiers moyens de serrage et aux seconds moyens de serrage.

Selon une autre caractéristique, les moyens de sollicitation comprennent des premiers moyens de sollicitation reliés aux premiers moyens de serrage et aux seconds moyens de serrage et des seconds moyens de sollicitation reliés aux premiers moyens de serrage et aux seconds moyens de serrage.

Les premiers moyens de sollicitation peuvent comprendre au moins le premier actionneur linéaire et les seconds moyens de sollicitation peuvent comprendre au moins le second actionneur linéaire.

Les premiers moyens de sollicitation et les seconds moyens de sollicitation sont agencés de manière symétrique l'un de l'autre relativement à un plan perpendiculaire contenant l'axe longitudinal d'extension des portions de rail.

L'utilisation de tels actionneurs linéaires permet de transmettre un mouvement longitudinal aux premier et deuxième châssis, mais également permettent d'induire le serrage des portions de rails par les mors simultanément avec le rapprochement des extrémités des portions de rails à souder.

Par ailleurs, selon l'invention,
- les premiers moyens de serrage comprennent un premier mors et un second mors articulés en rotation, autour d'un axe de préférence vertical, sur le premier châssis et reliés aux moyens de sollicitation, et
- les seconds moyens de serrage comprennent un troisième mors et un quatrième mors articulés en rotation, autour d'un axe de préférence vertical, sur le premier châssis et reliés aux moyens de sollicitation.

Ainsi, le mouvement de translation des premier et second actionneurs linéaires selon l'axe longitudinal, induit la rotation des couples de mors constituant les premier et second moyens de serrage, respectivement, sur le premier châssis et le deuxième châssis. Les mors des moyens de serrage sont ainsi reliés au premier et deuxième châssis par le biais d'une liaison pivot, permettant ainsi, aux couples de mors, respectivement constitués des premier et deuxième mors et des troisième et quatrième mors, d'être déplacés en position de serrage et en position libre lors de l'activation des actionneurs.

Egalement, selon l'invention :
- le premier mors est articulé en rotation, autour d'un axe de préférence vertical, sur une première extrémité du premier actionneur linéaire ;
- le second mors est articulé en rotation, autour d'un axe de préférence vertical, sur une première extrémité du second actionneur linéaire ;
- le troisième mors est articulé en rotation, autour d'un axe de préférence vertical, sur une seconde extrémité du premier actionneur linéaire ;
- le quatrième mors est articulé en rotation, autour d'un axe de préférence vertical, sur une seconde extrémité du second actionneur linéaire.

Ainsi, avec une telle configuration, le déplacement des couples de mors est coordonné, de sorte que les couples de mors de serrage soient placés dans une position de serrage ou une position libre simultanément. La liaison pivot des mors sur le châssis tel que décrit précédemment, permet donc aux actionneurs de déplacer en rotation les mors par rapport aux premier et deuxième châssis.

En outre, selon l'invention, le premier mors et le second mors sont couplés en rotation l'un avec l'autre par l'intermédiaire de premiers moyens de synchronisation de la vitesse de rotation desdits mors.

Selon une caractéristique supplémentaire, le troisième mors et le quatrième mors sont couplés en rotation l'un avec l'autre par l'intermédiaire de seconds moyens de synchronisation de la vitesse de rotation desdits mors.

Ainsi, chaque mors d'un même moyen de serrage, c'est-à-dire supporté par un même châssis sont déplacés en rotation de manière identique angulairement. Cela permet en particulier, lors du serrage des portions de rails, que la même contrainte soit appliquée de part et d'autre du rail. Les mors constitutifs d'un moyen de serrage sont alors animés d'un mouvement rotatif synchrone lors du déplacement des mors entre la position de serrage et la position libre.

De plus, dans un mode de réalisation, le premier et deuxième mors peuvent être reliés à un premier actionneur de serrage configuré pour établir la position libre et une position de pré-serrage des premiers moyens de serrage

Egalement, le troisième et quatrième mors peuvent être reliés à un second actionneur de serrage configuré pour établir la position libre et une position de pré-serrage des second moyens de serrage.

Par l'intermédiaire de cette liaison entre les premier et second actionneurs et les premier et deuxième châssis, les efforts longitudinaux des actionneurs sont également transmis aux châssis qui se déplacent alors longitudinalement les uns par rapport aux autres tel qu'autorisé par la glissière. Cela permet donc, lors de l'alignement et du rapprochement des deux portions de rails, que les premier et deuxième châssis coopèrent par glissement en fonction de la réduction ou de l'augmentation de la distance longitudinale entre les extrémités des portions de rails à souder.

En particulier, dans un autre mode de réalisation, la liaison à glissement peut être réalisée au moyen d'un dispositif à glissière comprenant au moins deux premiers bras longitudinaux appartenant au premiers châssis et apte à coulisser dans au moins deux seconds bras longitudinaux appartenant au deuxième châssis.

Ainsi, le coulissement des bras du premier châssis dans les bras du deuxième châssis, permet aux premier et deuxième châssis auxquels les premiers et deuxièmes actionneurs transmettent des efforts longitudinaux (orientés dans le même sens), de rapprocher ou d'éloigner les premier et deuxième châssis selon l'axe longitudinal relativement l'un à l'autre.

En outre, selon une autre caractéristique, les premiers moyens d'alignement du premier axe de la première portion de rail et les seconds moyens d'alignement du second axe de la seconde portion de rail peuvent comprendre chacun un module d'alignement latéral de l'axe de la portion de rail considérée avec l'axe longitudinal.

Egalement, les premiers moyens d'alignement du premier axe de la première portion de rail et les seconds moyens d'alignement du second axe de la seconde portion de rail peuvent comprendre chacun un module d'alignement vertical de l'axe de la portion de rail considérée avec l'axe longitudinal.

Ainsi, afin d'aligner les axes des deux portions de rails à souder, le système présente des moyens assurant l'alignement des portions de rails dans le plan longitudinal et des moyens assurant que les surfaces supérieures des champignons des portions de rails soient contenues dans un plan transversal au plan longitudinal.

Selon une caractéristique additionnelle, chaque module d'alignement latéral peut comprendre des moyens de crochetage apte à crocheter la partie inférieure du champignon de la portion de rail considérée de manière à positionner latéralement l'axe de la portion de rail selon l'axe longitudinal.

Selon un mode de réalisation particulier, les moyens de crochetage peuvent comprendre un couple de mâchoires configurés pour crocheter simultanément le rail considéré de part et d'autre du champignon.

En outre, les mâchoires peuvent être chacune articulée en rotation autour d'un axe parallèle à l'axe longitudinal.

En particulier, les axes de rotations de chacune des mâchoires d'un même couple de mâchoires sont symétriques par rapport au plan longitudinal.

Les moyens de crochetage viennent ainsi de part et d'autre de la portion de rail à aligner avec l'axe longitudinal, de sorte à assurer l'alignement latéral des portions de rails.

Egalement, les moyens de crochetage peuvent configurés pour déplacer verticalement vers le haut la portion de rail considérée jusqu'à une surface de butée appartenant au module d'alignement vertical.

Ainsi, les modules d'alignement latéral agissent de manière complémentaire sur les portions de rails avec les modules d'alignement vertical. En venant en prise de part et d'autre du rail, les mâchoires des moyens de crochetage viennent déplacer verticalement les portions de rails en contact avec la surface de butée du module d'alignement vertical, assurant un alignement des surfaces supérieures des champignons deux portions de rail à souder.

Dans un mode de réalisation spécifique, le système peut comprendre deux modules d'alignement vertical agencé longitudinalement de part et d'autre du module d'alignement latéral.

L'avantage d'une telle configuration est de permettre d'assurer un bon alignement de la portion de rail, en particulier de son extrémité à souder.

La présente divulgation concerne aussi une soudeuse pour rails ferroviaire comprenant un système tel que décrit précédemment, dans laquelle le système comprend un module de soudure ou moyens de soudure, de préférence par induction.

Un troisième châssis peut porter le module de soudure, de préférence par chauffage par induction, ce troisième châssis étant monté à coulissement sur le premier châssis selon l'axe longitudinal.

La soudeuse peut comprendre des moyens d'ébavurage de la zone de soudage desdites extrémités de portions de rails. Les moyens d'ébavurage peuvent être portés par un châssis indépendant du premier et deuxième châssis, lequel peut être monté à coulissement selon l'axe longitudinal. De cette manière, il est possible de conserver les extrémités des portions de rails en tension l'une sur l'autre après soudure, jusqu'à la fin de l'opération de liaison des extrémités de portions de rails.

En particulier, les moyens d'ébavurage peuvent être portés par le même châssis portant le module de soudure. Ce châssis peut être le troisième châssis.

L'utilisation d'un module de soudure par induction permet, en combinaison avec le système, d'assurer un soudage, sans défaut d'alignement des portions de rails selon l'axe longitudinal du système, et donc de meilleure qualité et présentant une meilleure résistance mécanique.

On comprend que l'utilisation du système selon la présente divulgation est particulièrement bien adaptée pour soudeuse par induction puisqu'il permet de réaliser un parfait alignement longitudinal des portions de rails.

Une telle soudeuse intègre ainsi tous les modules nécessaires au soudage de portions de rails, l'action des opérateurs se limitant au positionnement de la soudeuse au-dessus des portions de rails à souder.

Des moyens de refroidissement peuvent être prévus pour limiter l'échauffement des pièces du système.

Egalement, la soudeuse tel que présentée ici présente un format, telle qu'elle puisse être transportable et utilisable en pleine voie.

L'invention concerne également un procédé d'utilisation du système ou de la soudeuse, tels que décrits ci-dessus, comprenant les étapes suivantes :
a) Disposer la soudeuse au-dessus d'une première portion de rail et d'une seconde portion de rail dont les extrémités sont en vis-à-vis,
b) Commander les premiers moyens de serrage de la première portion de rail pour établir une position de serrage de la première portion de rail ;
c) Commander les moyens d'alignement de la première portion de rail pour aligner son axe avec l'axe longitudinal ;
d) Commander les seconds moyens de serrage de la seconde portion de rail pour établir une position de serrage de la seconde portion de rail ;
e) Commander les moyens d'alignement de la seconde portion de rail pour aligner son axe avec l'axe longitudinal ;
f) Commander les moyens de sollicitation des extrémités des portions de rail l'une sur l'autre.

L'invention sera mieux comprise et d'autres détails, caractéristiques et avantages de l'invention apparaîtront à la lecture de la description suivante faite à titre d'exemple non limitatif en référence aux dessins annexés.

### BREVE DESCRIPTION DES FIGURES

- la figure 1 est une vue en perspective d'une soudeuse selon l'invention ;
- la figure 2A est une vue perspective d'une partie du système pour soudeuse selon l'invention ;
- la figure 2B est une vue de dessous d'une partie du système de la figure 2A ;
- la figure 2C est une illustration schématique d'une première portion de rail d'axe X1 et d'une seconde portion de rail d'axe X2 destinées à être alignées selon un axe longitudinal A du système selon l'invention
- la figure 3 est une vue en perspective du système pour soudeuse selon l'invention où les premier et deuxième châssis sont dans une position dite écartée ;
- la figure 4 est une vue similaire à la figure 3 dans laquelle les premiers moyens de serrage du premier châssis sont en position de serrage ;
- la figure 5 est une vue de dessous d'une partie du système pour soudeuse selon l'invention où les premiers et les seconds moyens de serrage sont en position de serrage ;
- la figure 6 est une vue perspective de la soudeuse sans le carénage externe ;
- la figure 7A est une vue schématique d'un exemple d'un moyen d'alignement latéral, en position avec crochetage d'un rail ;
- la figure 7B est une vue schématique d'un moyen d'alignement latéral de la figure 7A en position de crochetage du rail ;
- la figure 8A est une vue schématique d'un exemple de moyen d'alignement vertical ;
- la figure 8B est une vue en perspective du moyen d'alignement vertical de la figure 8A avec un carter de fixation dans la soudeuse ;
- la figure 9 illustre une vue en perspective de l'alignement d'une portion de rail à l'aide des moyens d'alignement latéral et des moyens d'alignement vertical tels qu'illustrés aux figures 7A à 8B.

### DESCRIPTION DETAILLEE

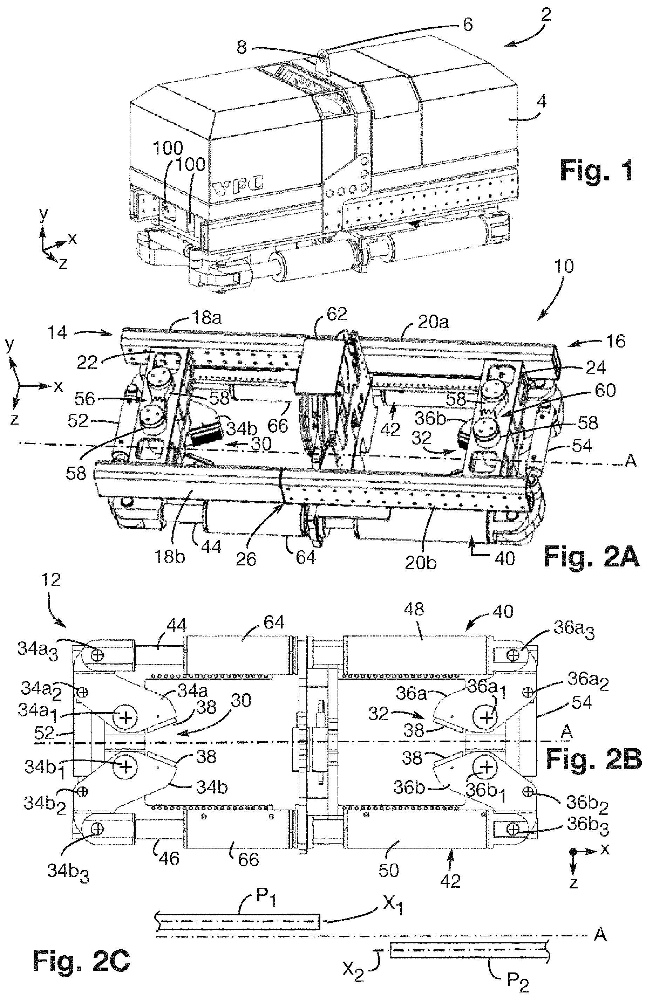

La figure 1 illustre donc un exemple de soudeuse 2 selon l'invention, destinée à souder une première portion de rail P1 et une seconde portion de rail P2 pouvant être utilisées pour constituer un rail d'une voie ferrée.

Comme on peut le voir, la soudeuse 2 comprend un carénage externe 4, destiné à protéger les éléments internes constitutifs de la soudeuse 2, notamment des intempéries ou de chocs. La soudeuse 2 comprend en outre un organe d'accrochage 6, composé d'une ouverture 8 de passage d'un organe de levage. Cet organe d'accrochage est relié au bâti de la soudeuse qui est formé de plusieurs châssis de sorte à pouvoir soulever la soudeuse 2 de manière à pouvoir la décharger ou la charger d'un véhicule pour l'installation de la soudeuse sur une voie de chemin de fer ou le retrait de l'installation.

La soudeuse 2 comprend un système destiné à être utilisé pour la soudure d'une première portion de rail P1 avec une seconde portion de rail P2.

Une vue en perspective d'un exemple d'une partie 10 de ce système est illustrée à la figure 2A. Cette partie 10 de système permet le rapprochement des deux portions de rails selon un axe longitudinal A du système. Ce système s'étend selon un axe longitudinal A, correspondant à l'axe x du référentiel 12, et comprend un premier 14 et un deuxième 16 châssis.

Le premier châssis 14 et le deuxième châssis 16 sont de préférence de forme générale identique de H. Les châssis pourraient aussi avoir une forme différente l'un de l'autre et/ou différente d'une forme en H. Ils comprennent deux portants longitudinaux 18a, 18b, 20a, 20b, parallèles, s'étendant parallèlement à l'axe x, reliés par l'une de leurs extrémités par un portant 22, 24 s'étendant perpendiculairement aux deux portants longitudinaux 18a, 18b, 20a, 20b, c'est-à-dire selon l'axe z. Les premier et deuxième châssis 14, 16 sont reliés par des moyens de liaison à glissement du premier châssis avec le deuxième châssis selon l'axe longitudinal A dit d'extension desdites deux portions de rail selon lequel le premier axe, selon lequel s'étend la première portion de rail, et le second axe, selon lequel s'étend la deuxième portion de rail, sont destinés à être alignés l'un avec l'autre et avec l'axe longitudinal.

Par liaison à glissement, on entend des moyens de coopération permettant la translation relative des premier et deuxième châssis 14, 16 selon l'axe longitudinal A, c'est-à-dire parallèlement à l'axe x du référentiel. Dans cet exemple, la liaison à glissement est réalisée au moyen d'un dispositif à glissière 26. Deux premiers bras longitudinaux 28a, 28b, appartenant au premier châssis 14, en particulier solidaires et disposés dans la continuité des portants longitudinaux 18a, 18b du premier châssis 14. Ces deux bras longitudinaux 28a, 28b sont aptes à coulisser dans au moins deux seconds bras longitudinaux, solidaires et disposés dans la continuité des portants longitudinaux 20a, 20b du deuxième châssis 16 ou directement dans les portants longitudinaux 20a, 20b du premier châssis 14.

Bien entendu, la liaison à glissement peut être inversée, c'est-à-dire que les seconds bras longitudinaux du deuxième châssis 16 sont aptes à coulisser dans les premiers bras du premier châssis 14 ou directement dans les portants longitudinaux 18a, 18b du premier châssis 14.

La course du deuxième châssis 16 par rapport au premier châssis 14 ou inversement est d'environ 750 mm.

Cet ensemble comprenant les deux châssis 14, 16 constitue le support sur lequel sont montés différents modules du système et de la soudeuse 2 selon l'invention.

En particulier, le système comprend en outre des moyens de serrage des portions de rails à souder, de sorte à les maintenir en position, ou à exercer des efforts longitudinaux afin de rapprocher les extrémités des portions de rails en vue de les souder.

Ainsi, des premiers moyens de serrage 30 de la première portion de rail P1 sont portés par le premier châssis 14. Ces moyens de serrage 30 sont configurés pour établir au moins une position libre dans laquelle la portion de rail P1 n'est pas serrée et est librement déplaçable par rapport auxdits premiers moyens de serrage et au moins une position de serrage de la première portion de rail empêchant toute translation longitudinale de ladite portion de rail P1. Similairement, des seconds moyens de serrage 32 de la seconde portion de rail sont portés par le deuxième châssis 16 et configurés pour établir au moins une position libre de la seconde portion de rail P2 et au moins une position de serrage de la seconde portion de rail P2.

En figure 2A, les premiers 30 et seconds 32 moyens de serrage sont dans une position libre. Les premiers 30 et seconds 32 moyens de serrage sont d'ailleurs mieux visibles en figure 2B, celle-ci étant une vue de dessous de la figure 2A.

Dans la réalisation représentée aux figures 2A et 2B, les premiers 30 et seconds 32 moyens de serrage comprennent chacun des couples de mors. En particulier, les premiers moyens de serrage comprennent un premier mors 34a et un second mors 34b articulés en rotation sur le premier châssis 14. Les premiers 34a et second 34b mors sont mobiles en rotation autour respectivement d'un premier axe vertical 34a1 et d'un deuxième axe 34b1 vertical, le premier axe 34a1et le second axe 34b1 sont parallèles à l'axe y du référentiel. Les premier 34a1 et deuxième 34b1 axes verticaux sont en outre équidistants de l'axe longitudinal A du système 10 et situés de part et d'autre d'un plan vertical comprenant l'axe longitudinal A. De manière similaire, les seconds moyens de serrage 32 comprennent un troisième mors 36a et un quatrième mors 36b articulés en rotation sur le deuxième châssis 16 respectivement autour d'un troisième axe 36a1 vertical et quatrième 36b1 axe vertical. Les troisième 36a1 et quatrième 36b1 axes verticaux sont également parallèles et équidistants à l'axe longitudinal du système et situés de part et d'autre d'un plan vertical comprenant l'axe longitudinal A.

Les mors 34a, 34b, 36a, 36b comprennent chacun une partie de contact 38 destinée à être appliquée, c'est-à-dire à venir en contact avec le rail, en particulier en appui sur l'âme du rail, lorsque les moyens de serrage sont en position de serrage. Cette partie 38 comprend un revêtement en acier durcie, dont la surface destinée à être en appui sur l'âme de la portion de rail est grippée de sorte à mieux transmettre les efforts sur la portion de rail sur laquelle elle est appliquée.

Comme on peut le voir sur les figures 2A et 2B, les mors de serrage 34a, 34b, 36a, 36b, c'est-à-dire les premiers moyens de serrage 30 et les seconds moyens de serrage 32, sont chacun reliés à des moyens de sollicitation, ici un premier actionneur linéaire 40 et un second actionneur linéaire 42. Ces deux actionneurs 40, 42 sont disposés de part et d'autre de l'axe longitudinal A du système, et sont équidistants à l'axe longitudinal A et sont situés de part et d'autre d'un plan vertical comprenant l'axe longitudinal A.

Dans le présent document, on entend par actionneur un dispositif qui transforme l'énergie qui lui est fournie en un phénomène physique qui fournit un travail, modifie le comportement ou l'état d'un système. Ainsi, un vérin pneumatique ou hydraulique génère un mouvement à partir d'une énergie mécanique transmise par un fluide gazeux ou liquide.

Dans l'exemple ici illustré, une extrémité du piston 44 du premier vérin 40 est reliée au premier mors 34a et le corps 48 du premier vérin 40 est relié au troisième mors 36a. Une extrémité du piston 46 du deuxième vérin 42 est reliée au deuxième mors 34b et le corps 50 du deuxième second vérin 42 est relié au quatrième mors 36b. Les mors 34a, 34b, 36a, 36b des premiers et des seconds moyens de serrage 30, 32, les premiers 34a, deuxième 34b, troisième 36a et quatrième mors 36b sont reliés au premier vérin 40 et au deuxième vérin 42 de sorte à être articulés en rotation autour respectivement de premier 34a3, deuxième 34b3, troisième 36a3 et quatrième 36b3 axes verticaux, ces axes étant parallèles entre eux, et équidistants deux à deux à l'axe longitudinal A du système et situés de part et d'autre d'un plan vertical comprenant l'axe longitudinal. La course des pistons 44, 46 des actionneurs linéaires 40, 42 est d'environ 750 mm.

Par conséquent, ces actionneurs linéaires 40, 42 sont aptes à exercer sur les mors de serrage 34a, 34b, 36a, 36b un effort longitudinal, c'est-à-dire orienté selon l'axe x du référentiel. Ainsi, l'actionnement des premiers et seconds moyens de sollicitation, c'est-à-dire des premier et second vérins 40, 42 induit un serrage de la première portion de rail par les premiers moyens de serrage 30, c'est-à-dire des premier et deuxième mors de serrage 34a, 34b et un serrage de la seconde portion de rail par les seconds moyens de serrage 32, c'est-à-dire des troisième et quatrième mors de serrage 36a, 36b.

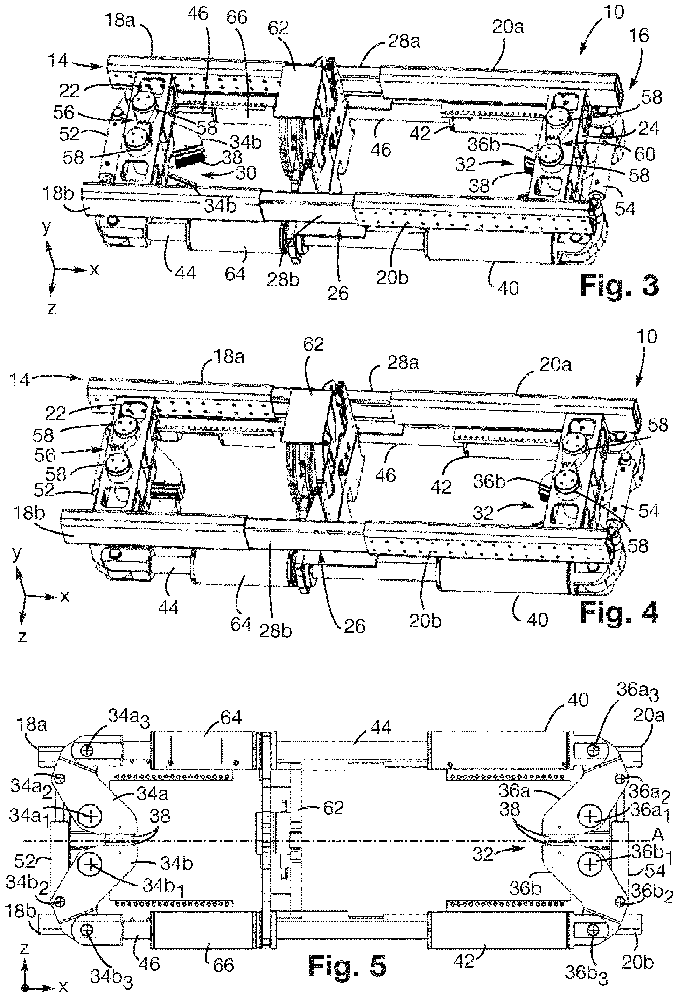

Ces actionneurs 40, 42 permettent également de solliciter des extrémités des portions de rail l'une vers l'autre en vue de leur soudure. En effet, une fois les moyens de serrage en position de serrage (figure 5) à l'aide des actionneurs linéaires 40, 42, l'effort longitudinal permet de rapprocher les extrémités des portions de rails selon l'axe longitudinal A du système tout en augmentant l'effort de serrage appliqué à chaque couple de mors 34a, 34b et 36a, 36b.

Les actionneurs 40, 42 sont également reliés au premier châssis 14 par l'intermédiaire des premiers moyens de serrage 30 et au deuxième châssis 16 par l'intermédiaire des seconds moyens de serrage 32. Ainsi, les efforts longitudinaux des actionneurs linéaires 40, 42, sont transmis auxdits premier et deuxième châssis 14, 16, qui grâce à leur liaison à glissement 26, suivent le mouvement longitudinal des pistons 44, 46 des vérins 40, 42.

Le système comprend également des actionneurs latéraux, aussi appelés actionneurs de serrage 52, 54, comme visible sur les figures 2A et 2B. Le premier et second actionneurs de serrage 52, 54, des vérins dans l'exemple illustré, sont respectivement portés par les premier et deuxième mors 34a, 34b et les troisième et quatrième mors 36a, 36b. Ces vérins 52, 54, dont le point de liaison, plus précisément l'axe de rotation, avec les mors 34a, 34b, 36a, 36b est disposé, selon la direction z du référentiel, entre les points de liaison avec l'actionneur linéaire 40, 42 et le point de liaison avec le châssis 14, 16, permettent de positionner les moyens de serrage 30, 32 dans une position dite de pré-serrage, consistant à rapprocher les parties 38 destinées à être en contact avec le rail de ce dernier (et donc de l'axe longitudinal A). Ils sont également configurés pour positionner les mors 34a, 34b, 36a, 36b des premiers et seconds moyens de serrage 30, 32 dans une position libre, où les mors 34a, 34b, 36a, 36b sont écartés par rotation de l'axe longitudinal A. La liaison entre les actionneurs de serrage 52, 54 et les mors 34a, 34b, 36a, 36b permet une rotation autour des axes verticaux respectifs 34a2, 34b2, 36a2, 36b2 de sorte que l'activation des actionneurs de serrage 52, 54 permet la rotation des mors 34a, 34b, 36a, 36b autour de leurs liaison pivot 34a1, 34b1, 36a1, 36b1 avec le châssis 14, 16. La course des pistons des actionneurs de serrage 50, 52 est d'environ 200 mm.

Nous expliquerons, par la suite en référence aux figures 3 à 5, l'ordre d'activation des actionneurs linéaires 40, 42 et des actionneurs de serrage 52, 54, pour permettre la préhension des portions de rails à souder et le rapprochement, selon l'axe longitudinal A, des extrémités des portions P1, P2 de rail à souder.

Afin d'assurer la synchronisation des mouvements rotatifs des mors 34a, 34b, 36a, 36b autour de leurs axes 34a1, 34b1, 36a1, 36b1, composant les moyens de serrage 30, 32, des moyens de synchronisation 56, 60 sont utilisés.

Comme on peut voir sur la figure 2A, les moyens de synchronisation 56, 60 comprennent deux pièces comprenant une tige, solidaire respectivement du premier et du deuxième mors 34a, 34b et une tête 58 comportant des dents. Leurs tiges sont disposées dans deux alésages traversant du premier châssis 14, tel que les têtes 58 soient disposées sur la partie supérieure du châssis 14 selon l'axe z et que les pièces soient mobiles en rotation à l'intérieur des deux alésages. Les têtes 58 des premiers moyens de synchronisation 56 sont ainsi orientés de sorte que les dents des première et deuxième têtes 58 engrènent ensemble. Ainsi, lors de la rotation des premier et deuxième mors 34a, 34b des premiers moyens de serrage 30, les première et deuxième pièces sont entrainées en rotation. L'engrenage des dents desdites premières et deuxièmes têtes 58 permet de contraindre la rotation de ces mors 34a, 34b. Ainsi, leur vitesse de rotation angulaire est identique, lors de l'actionnement des premier et second actionneurs linéaires 40, 42 et/ou lors de l'actionnement du premier actionneur latéral 52. En particulier, les efforts des mors 34a, 34b sur les rails sont répartis de manière identique de part et d'autre de celui-ci. Bien entendu, des deuxième moyens de synchronisation 60 identiques sont utilisés pour les seconds moyens de serrages 32, c'est-à-dire le troisième et le quatrième mors 36a, 36b. Ainsi, les premiers et deuxièmes mors 34a, 34b et les troisième et quatrième mors 36a, 36b sont couplés en rotation par l'intermédiaire respectivement des premiers moyens de synchronisation de vitesse et des seconds moyens de synchronisation de vitesse 56, 60.

Comme on peut le voir également sur les figures 2A et 2B, un châssis central, appelé troisième châssis 62, est reliés au corps d'un premier vérin 64 et d'un deuxième vérin 66 permettant de déplacer longitudinalement le troisième châssis 62. Les tiges des premier et deuxième vérins de positionnement du troisième châssis sont respectivement les tiges 44, 46 du premier actionneur linéaire 40 et du deuxième actionneur linéaire 42.

Le troisième châssis 62 s'étend perpendiculairement aux portants latéraux 18a, 18b, 20a, 20b des premier et deuxième châssis 14, 16, c'est-à-dire selon la direction z du référentiel. La course des pistons des actionneurs 64, 66 de positionnement du troisième châssis 62 est d'environ 300 mm.

Le troisième châssis 62 porte les moyens de soudure, et peut, par l'intermédiaire des premiers et deuxième actionneur 64, 66 de positionnement du troisième châssis 62, être déplacé dans une position souhaitée selon l'axe longitudinal A.

Les figures 3 à 5 illustrent différents états de la partie du système permettant le rapprochement de portions de rails.

La figure 3 illustre une position de la partie du système où les actionneurs linéaires 40, 42 sont activés, et que les pistons 44, 46 de ces actionneurs 40, 42 sont en bout de course, dans une position dite étendue.

Comme on peut le voir, par la liaison glissière 26 entre le premier et deuxième châssis14, 16, la partie du système est en position dite étendue, où le premier et deuxième châssis 14, 16 sont ainsi translatés et éloignés l'un de l'autre par rapport à la position compacte du système tel que visible aux figures 2A et 2B.

La figure 4 illustre une position de la partie du système, où le premier actionneur de serrage 52 est activé de sorte à positionner les premier et deuxième mors 34a, 34b dans une position de pré-serrage. Comme on peut le voir en comparant à la figure 3, par rotation des mors 34a, 34b selon les premier 34a1 et deuxième 34a2 axes verticaux, les parties 38 destinées à être en contact avec le rail sont rapprochées l'une de l'autre et de l'axe longitudinal A du système. Cette rotation des mors est contrainte par les moyens de synchronisation de vitesse 56, dont la position est modifiée par rapport à la figure 3.

La figure 5 illustre une vue du dessous, suite à l'activation du deuxième actionneur de serrage 54 de sorte à positionner les troisième et quatrième mors 36a, 36b dans une position de pré-serrage, c'est-à-dire avant mise en fonctionnement des moyens sollicitation. A partir de cette configuration de la partie du système, l'actionnement des actionneurs linéaires 40, 42 permet de positionner les premier et deuxième mors 34a, 34b et les troisième et quatrième mors 36a, 36b dans une position de serrage respectivement autour d'une première portion de rail et d'une seconde portion de rail, et d'appliquer par la suite un effort selon la direction longitudinale du système, c'est-à-dire selon l'axe x, sur les portions de rail. Les premiers et deuxièmes châssis 14, 16, par l'intermédiaire de la liaison glissière 26, sont alors translatés l'un vers l'autre, selon la direction longitudinale, vers la position dite compacte.

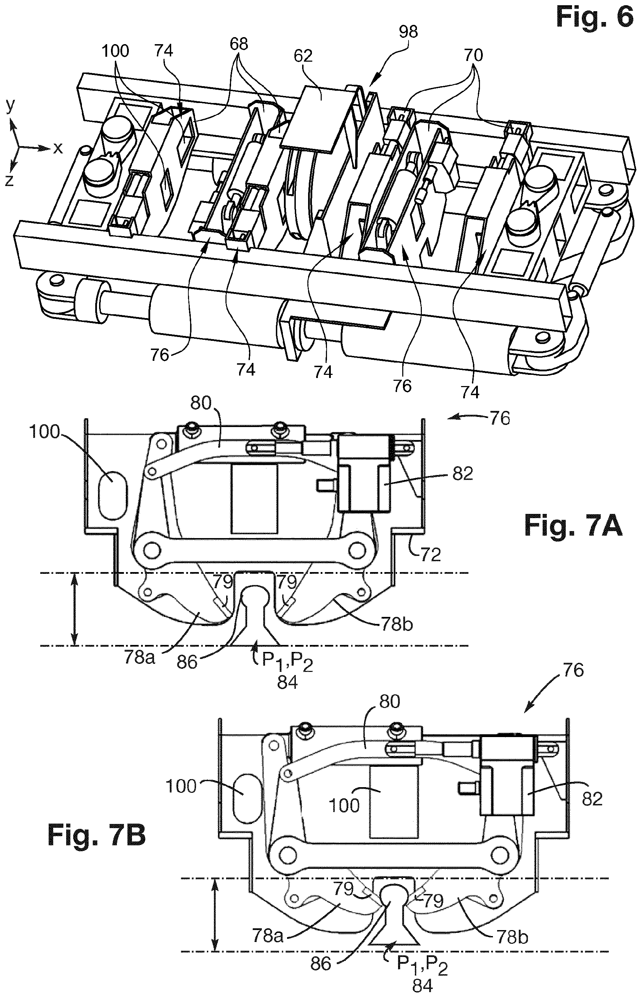

Pour assurer le bon alignement des portions de rails lors de leur rapprochement selon l'axe longitudinal A en vue de leur soudure, le système comprend en outre des moyens d'alignement qui sont bien visibles sur la figure 6.

En particulier, le système comprend des premiers moyens d'alignement 68 du premier axe X1 de la première portion de rail selon l'axe longitudinal A portés par le premier châssis 14 et des seconds moyens d'alignement 70 du second axe X2 de la seconde portion de rail selon l'axe longitudinal A portés par le deuxième châssis 16 (voir figure 2C). Ainsi, comme on peut le voir sur la figure 6, les moyens d'alignement 68 du premier axe de la première portion de rail est assuré par des modules, s'étendant selon la direction z du référentiel perpendiculairement aux portants latéraux 18a, 18b du premier châssis 14, comprenant des carters 72 de fixation par l'intermédiaire desquels ils sont disposés sur le premier châssis 14 sur les portants latéraux 18a, 18b. Une configuration symétrique est observable au niveau du deuxième châssis 16.

Chacun des premier et deuxième châssis 14, 16 comprend ainsi deux modules d'alignement vertical 74 agencés de part et d'autre du module d'alignement latéral 76.

Un exemple de module d'alignement latéral 76 est illustré aux figures 7A et 7B. Le module d'alignement latéral 76 comprend ainsi des moyens de crochetage apte à crocheter la partie inférieure du champignon de la portion de rail considérée de manière à positionner latéralement l'axe de la portion de rail selon l'axe longitudinal. Ces moyens de crochetage sont un couple de mâchoires, chacune des mâchoires 78a, 78b étant disposée de part et d'autre de l'axe longitudinal, de préférence en regard l'une de l'autre. Les mâchoires 78a, 78b s'étendent selon l'axe z du référentiel, et ont une forme générale de L : à l'une des extrémités, les mâchoires présentent un rebord 79 comprenant une composante selon l'axe z du référentiel. Ce rebord 79 destiné à venir en contact avec la portion de rail, sous le champignon, peut présenter un revêtement durci.

Les mâchoires 78a, 78b sont portées par un carter 72 et articulées en rotation sur ce carter 72, autour de deux axes parallèles à la direction longitudinale, c'est à dire la direction x du référentiel. Les deux mâchoires 78a, 78b sont reliées par une tige rigide 80, elle-même reliée à un actionneur 82, permettant aux deux mâchoires 78a, 78b, lors de l'activation de l'actionneur 82, d'être déplacées simultanément en rotation et de venir crocheter la portion de rail 84 de part et d'autre simultanément.

La figure 7B illustre le cas où les mâchoires 78a, 78b viennent en prise avec le champignon 86 de la portion de rail 84. Comme on peut le voir, la prise des mâchoires 78a, 78b, induit un léger mouvement de la portion de rail 84 selon la direction verticale, c'est-à-dire la direction y du référentiel. Ainsi les moyens de crochetage viennent déplacer verticalement la portion de rail 84 considérée jusqu'à une surface de butée 88 apparentant au module d'alignement vertical 74.

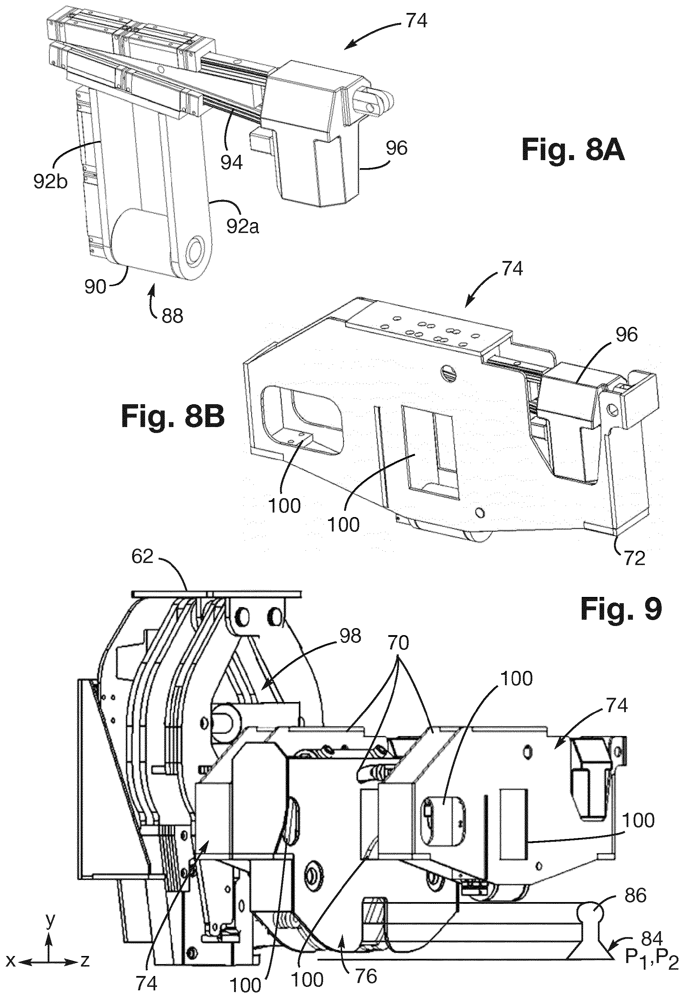

Un exemple de module d'alignement vertical 74 est illustré aux figures 8A et 8B sans et avec le carter de fixation. Le module comprend un rouleau 90 s'étendant selon la direction z, entre deux tiges de fixation 92a, 92b parallèles s'étendant selon l'axe y, et fixées à leur extrémité libre un bras 94 relié à un actionneur 96. L'actionneur 96 permet, en particulier, de régler la hauteur du rouleau 90 composant la surface de butée 88 permettant l'alignement vertical de la portion de rail.

En particulier, le rouleau 90est mobile en rotation autour d'un axe parallèle à l'axe z du référentiel, de sorte à éviter toute blessure de la surface supérieure du champignon de la portion de rail lors des opérations d'alignement.

Comme on peut le voir sur la figure 9, les modules d'alignement vertical 74 et latéral 76 sont complémentaires. En déplaçant les portions de rails 84 verticalement contre les rouleaux 90, l'alignement vertical est assuré, et les mâchoires 78a, 78b, maintenant les portions de rails 84 de part et d'autre de l'axe longitudinal A, en assure l'alignement avec l'axe longitudinal A.

Ainsi, un tel système peut être intégré au sein d'une soudeuse 2 pour rails ferroviaires. La soudeuse 2 comprend alors un système tel que présenté sur lequel un module de soudure 98 est disposé sur le troisième châssis 62. Le module de soudure 98 peut de préférence permettre le chauffage par induction. Comme détaillé plus haut, ce troisième châssis 62 est monté à coulissement sur les premier et deuxième châssis 14, 16 selon l'axe longitudinal A, et est mobile par le biais de deux actionneurs 64, 66de déplacement du troisième châssis.

Il est également prévu de permettre de mesurer l'alignement du rail avant, pendant et après les opérations de soudage. Pour cela, des ouvertures traversantes 100 sont aménagées au niveau des carters 72 des modules d'alignement ainsi du carter externe 4 de la soudeuse 2, dimensionnées pour y faire passer une poutre de mesure d'alignement verticale et une poutre de mesure d'alignement latéral.

Ces poutres de mesure sont ainsi disposées en regard des portions de rail à souder ou soudées. Elles comprennent des capteurs de distances, par laser, réparties sur toute la longueur des poutres.

Les poutres sont solidaires au troisième châssis 62 et s'étendent selon l'axe longitudinal. Chacune de ces poutres est supportée par le premier et deuxième châssis 14, 16 par le biais de moyens d'absorption de déformation et de vibrations. Par exemple, ces moyens d'absorption de déformation sont des tampons en caoutchouc.

Ce montage permet de rendre ces poutres structurellement indépendantes des premier et deuxième châssis 14, 16 de sorte que leur positionnement ne soit pas impacté par des déformations de ces châssis 14, 16.

On comprend que ces poutres de mesure d'alignement peuvent être utilisées avec n'importe quelle soudeuse 2, et quels que soient moyens d'alignement des portions de rails utilisés.

Le procédé d'utilisation du système pour soudeuse 2 tel que présenté dans ce document comprend les étapes suivantes :
a) Disposer la soudeuse 2 au-dessus d'une première portion de rail et d'une seconde portion de rail dont les extrémités sont en vis-à-vis,
b) Commander les premiers moyens de serrage 30 de la première portion de rail pour établir une position de serrage de la première portion de rail ;
c) Commander les moyens d'alignement 68 de la première portion de rail pour aligner son axe avec l'axe longitudinal ;
d) Commander les seconds moyens de serrage 32 de la seconde portion de rail pour établir une position de serrage de la seconde portion de rail ;
e) Commander les moyens d'alignement 70 de la seconde portion de rail pour aligner son axe avec l'axe longitudinal ;
f) Commander les moyens de sollicitation 40, 42 des extrémités des portions de rail l'une sur l'autre.

Lorsque le système est intégré à une soudeuse 2 telle que décrite, l'étape c) est suivie de la commande des actionneurs 64, 66 de positionnement du troisième châssis 62, de sorte à positionner le module de soudure à la verticale selon la direction y de l'extrémité de la première portion de rail à souder.

## Revendications

1. Système destiné à être utilisé pour la soudure d'une extrémité d'une première portion de rail avec une extrémité d'une seconde portion de rail, la première portion de rail s'étendant selon un premier axe et la seconde portion de rail s'étendant selon un second axe, le système comprenant :
- un premier châssis (14) et un deuxième châssis (16) ;
- des moyens de liaison à glissement du premier châssis (14) avec le deuxième châssis (16) selon un axe longitudinal (A) d'extension desdites deux portions de rail selon lequel le premier axe et le second axe sont destinés à être alignés l'un avec l'autre et avec l'axe longitudinal (A) ;
- des premiers moyens de serrage (30) de la première portion de rail portés par le premier châssis (14) et configurés pour établir au moins une position libre et au moins une position de serrage de la première portion de rail ;
- des seconds moyens de serrage (32) de la seconde portion de rail portés par le deuxième châssis (16) et configurés pour établir au moins une position libre et au moins une position de serrage de la seconde portion de rail ;
- des moyens de sollicitation des extrémités des portions de rail l'une sur l'autre,
- des premiers moyens d'alignement (68) du premier axe de la première portion de rail selon l'axe longitudinal portés par le premier châssis (14) et des seconds moyens d'alignement (70) du second axe de la seconde portion de rail selon l'axe longitudinal portés par le deuxième châssis (16).
**caractérisé en ce que** les moyens de sollicitation sont reliés au premier châssis (14) par l'intermédiaire des premiers moyens de serrage (30) et au deuxième châssis (16) par l'intermédiaire des seconds moyens de serrage (32) de manière à ce que l'actionnement des moyens de sollicitation induisent un serrage de la première portion de rail par les premiers moyens de serrage (30) et un serrage de la seconde portion de rail par les seconds moyens de serrage (32), et comprennent un premier actionneur linéaire (40) et un second actionneur linéaire (42) chacun reliés aux premiers moyens de serrage (30) et aux seconds moyens de serrage (32), et **en ce que** :
- les premiers moyens de serrage (30) comprennent un premier mors (34a) et un second mors (34b) articulés en rotation sur le premier châssis (14) et reliés aux moyens de sollicitation, le premier mors (34a) et le second mors (34b) étant couplés en rotation l'un avec l'autre par l'intermédiaire de premiers moyens de synchronisation (56) de la vitesse de rotation desdits mors (34a, 34b),
- les seconds moyens de serrage (32) comprennent un troisième mors (36a) et un quatrième mors (36b) articulés en rotation sur le deuxième châssis (16) et reliés aux moyens de sollicitation, le troisième mors (36a) et le quatrième mors (36b) étant couplés en rotation l'un avec l'autre par l'intermédiaire de seconds moyens de synchronisation (60) de la vitesse de rotation desdits mors (36a, 36b),
- le premier mors (34a) est articulé en rotation sur une première extrémité du premier actionneur linéaire (40),
- le second mors (34b) est articulé en rotation sur une première extrémité du second actionneur linéaire (42),
- le troisième mors (36a) est articulé en rotation sur une seconde extrémité du premier actionneur linéaire (40),
- le quatrième mors (36b) est articulé en rotation sur une seconde extrémité du second actionneur linéaire (42).

2. Système selon la revendication 1, dans lequel le premier et deuxième mors (34a, 34b) sont reliés à un premier actionneur de serrage (52) configuré pour établir la position libre et une position de pré-serrage des premiers moyens de serrage (30).

3. Système selon l'une des revendications 1 ou 2, dans lequel le troisième et quatrième mors (36a, 36b) sont reliés à un second actionneur de serrage (54) configuré pour établir la position libre et une position de pré-serrage des second moyens de serrage (32).

4. Système selon l'une des revendications précédentes, dans lequel la liaison à glissement est réalisée au moyen d'un dispositif à glissière (26) comprenant au moins deux premiers bras longitudinaux (28a, 28b) appartenant au premiers châssis (14) et apte à coulisser dans au moins deux seconds bras longitudinaux (20a, 20b) appartenant au deuxième châssis (16).

5. Système selon l'une des revendications précédentes, dans lequel les premiers moyens d'alignement (68) du premier axe de la première portion de rail et les seconds moyens d'alignement (70) du second axe de la seconde portion de rail comprennent chacun un module d'alignement latéral (76) de l'axe de la portion de rail considérée avec l'axe longitudinal (A).

6. Système selon l'une des revendications précédentes, dans lequel les premiers moyens d'alignement (68) du premier axe de la première portion de rail et les seconds moyens d'alignement (70) du second axe de la seconde portion de rail comprennent chacun un module d'alignement vertical (74) de l'axe de la portion de rail considérée avec l'axe longitudinal (A).

7. Système selon la revendication 5 ou les revendications 5 et 6, dans lequel chaque module d'alignement latéral (74) comprend des moyens de crochetage apte à crocheter la partie inférieure du champignon de la portion de rail considérée de manière à positionner latéralement l'axe de la portion de rail selon l'axe longitudinal (A).

8. Système selon la revendication 7, dans lequel les moyens de crochetage comprennent un couple de mâchoires (78a, 78b) configurés pour crocheter simultanément la portion de rail considérée de part et d'autre du champignon.

9. Système selon la revendication 8, dans lequel les mâchoires (78a, 78b) sont chacune articulée en rotation autour d'un axe parallèle à l'axe longitudinal.

10. Système selon l'une des revendications 7 à 9, dans lequel les moyens de crochetage sont configurés pour déplacer verticalement vers le haut la portion de rail considérée jusqu'à une surface de butée (88) appartenant au module d'alignement vertical (74).

11. Système selon la revendication 5 et l'une des revendications 6 à 10, dans lequel il comprend deux modules d'alignement vertical (74) agencé longitudinalement de part et d'autre du module d'alignement latéral (76).

12. Soudeuse (2) pour rails ferroviaires comprenant un système selon l'une des revendications précédentes, dans lequel il comprend un module de soudure (98), de préférence par chauffage par induction.

13. Soudeuse selon la revendication 12, dans laquelle un troisième châssis porte le module de soudure.

14. Soudeuse selon la revendication 13, dans laquelle le troisième châssis (62) est monté à coulissement sur le premier châssis (14) selon l'axe longitudinal (A).

15. Procédé d'utilisation de la soudeuse selon la revendication 13 ou 14 comprenant les étapes suivantes :
a) Disposer la soudeuse (2) au-dessus d'une première portion de rail et d'une seconde portion de rail dont les extrémités sont en vis-à-vis,
b) Commander les premiers moyens de serrage (30) de la première portion de rail pour établir une position de serrage de la première portion de rail ;
c) Commander les moyens d'alignement (68) de la première portion de rail pour aligner son axe avec l'axe longitudinal ;
d) Commander les seconds moyens de serrage (32) de la seconde portion de rail pour établir une position de serrage de la seconde portion de rail ;
e) Commander les moyens d'alignement (70) de la seconde portion de rail pour aligner son axe avec l'axe longitudinal ;
f) Commander les moyens de sollicitation des extrémités des portions de rail l'une sur l'autre.

## Patentansprüche

1. System zur Verwendung beim Verschweißen eines Endes eines ersten Schienenabschnitts mit einem Ende eines zweiten Schienenabschnitts, wobei sich der erste Schienenabschnitt entlang einer ersten Achse und der zweite Schienenabschnitt entlang einer zweiten Achse erstreckt, wobei das System umfasst:
- einen ersten Rahmen (14) und einen zweiten Rahmen (16);
- Mittel zur Gleitverbindung des ersten Rahmens (14) mit dem zweiten Rahmen (16) entlang einer Erstreckungslängsachse (A) der beiden Schienenabschnitte, entlang der die erste Achse und die zweite Achse miteinander und mit der Längsachse (A) fluchtend ausgerichtet werden sollen;
- erste Spannmittel (30) zum Verspannen des ersten Schienenabschnitts, die von dem ersten Rahmen (14) getragen werden und dazu ausgelegt sind, zumindest eine Freigabestellung und zumindest eine Spannstellung des ersten Schienenabschnitts zu bewirken;
- zweite Spannmittel (32) zum Verspannen des zweiten Schienenabschnitts, die von dem zweiten Rahmen (16) getragen werden und dazu ausgelegt sind, zumindest eine Freigabestellung und zumindest eine Spannstellung des zweiten Schienenabschnitts zu bewirken;
- Andrückmittel zum Aneinanderdrücken der Enden der Schienenabschnitte,
- erste Ausrichtmittel (68) zum Ausrichten der ersten Achse des ersten Schienenabschnitts entlang der Längsachse, die von dem ersten Rahmen (14) getragen werden, und zweite Ausrichtmittel (70) zum Ausrichten der zweiten Achse des zweiten Schienenabschnitts entlang der Längsachse, die von dem zweiten Rahmen (16) getragen werden,
**dadurch gekennzeichnet, dass**
die Andrückmittel über die ersten Spannmittel (30) mit dem ersten Rahmen (14) und über die zweiten Spannmittel (32) mit dem zweiten Rahmen (16) so verbunden sind, dass die Betätigung der Andrückmittel ein Verspannen des ersten Schienenabschnitts durch die ersten Spannmittel (30) und ein Verspannen des zweiten Schienenabschnitts durch die zweiten Spannmittel (32) bewirkt, und einen ersten Linearantrieb (40) und einen zweiten Linearantrieb (42) umfassen, die jeweils mit den ersten Spannmitteln (30) und den zweiten Spannmitteln (32) verbunden sind,
und dass
- die ersten Spannmittel (30) eine erste Spannbacke (34a) und eine zweite Spannbacke (34b) umfassen, die drehbar an dem ersten Rahmen (14) angelenkt und mit den Andrückmitteln verbunden sind, wobei die erste Spannbacke (34a) und die zweite Spannbacke (34b) über erste Synchronisationsmittel (56) zur Synchronisation der Drehgeschwindigkeit der Spannbacken (34a, 34b) drehbar miteinander gekoppelt sind,
- die zweiten Spannmittel (32) eine dritte Spannbacke (36a) und eine vierte Spannbacke (36b) umfassen, die drehbar an dem zweiten Rahmen (16) angelenkt und mit den Andrückmitteln verbunden sind, wobei die dritte Spannbacke (36a) und die vierte Spannbacke (36b) über zweite Synchronisationsmittel (60) zur Synchronisation der Drehgeschwindigkeit der Spannbacken (36a, 36b) drehbar miteinander gekoppelt sind,
- die erste Spannbacke (34a) drehbar an einem ersten Ende des ersten Linearantriebs (40) angelenkt ist;
- die zweite Spannbacke (34b) drehbar an einem ersten Ende des zweiten Linearantriebs (42) angelenkt ist;
- die dritte Spannbacke (36a) drehbar an einem zweiten Ende des ersten Linearantriebs (40) angelenkt ist;
- die vierte Spannbacke (36b) drehbar an einem zweiten Ende des zweiten Linearantriebs (42) angelenkt ist.

2. System nach Anspruch 1,
wobei die erste und die zweite Spannbacke (34a, 34b) mit einem ersten Spannstellglied (52) verbunden sind, das dazu ausgelegt ist, die Freigabestellung und eine Vorspannstellung der ersten Spannmittel (30) zu bewirken.

3. System nach einem der Ansprüche 1 oder 2,
wobei die dritte und vierte Spannbacke (36a, 36b) mit einem zweiten Spannstellglied (54) verbunden sind, das dazu ausgelegt ist, die Freigabestellung und eine Vorspannstellung der zweiten Spannmittel (32) zu bewirken.

4. System nach einem der vorhergehenden Ansprüche,
wobei die Gleitverbindung mittels einer Gleitschienenvorrichtung (26) hergestellt ist, die zumindest zwei erste Längsarme (28a, 28b) umfasst, die zu dem ersten Rahmen (14) gehören und in zumindest zwei zweiten Längsarmen (20a, 20b) gleitbeweglich sind, die zu dem zweiten Rahmen (16) gehören.

5. System nach einem der vorhergehenden Ansprüche,
wobei die ersten Ausrichtmittel (68) zum Ausrichten der ersten Achse des ersten Schienenabschnitts und die zweiten Ausrichtmittel (70) zum Ausrichten der zweiten Achse des zweiten Schienenabschnitts jeweils ein Lateralausrichtmodul (76) zum lateralen Ausrichten der Achse des betreffenden Schienenabschnitts mit der Längsachse (A) umfassen.

6. System nach einem der vorhergehenden Ansprüche,
wobei die ersten Ausrichtmittel (68) zum Ausrichten der ersten Achse des ersten Schienenabschnitts und die zweiten Ausrichtmittel (70) zum Ausrichten der zweiten Achse des zweiten Schienenabschnitts jeweils ein Vertikalausrichtmodul (74) zum vertikalen Ausrichten der Achse des betreffenden Schienenabschnitts mit der Längsachse (A) umfassen.

7. System nach Anspruch 5 oder nach den Ansprüchen 5 und 6,
wobei jedes Lateralausrichtmodul (74) Festhaltemittel umfasst, die dazu geeignet sind, den unteren Teil des Schienenkopfes des betreffenden Schienenabschnitts so festzuhalten, dass die Achse des Schienenabschnitts entlang der Längsachse (A) seitlich positioniert wird.

8. System nach Anspruch 7,
wobei die Festhaltemittel ein Paar Festhalteklauen (78a, 78b) umfassen, die dazu ausgelegt sind, den betreffenden Schienenabschnitt gleichzeitig auf beiden Seiten des Schienenkopfes festzuhalten.

9. System nach Anspruch 8,
wobei die Festhalteklauen (78a, 78b) jeweils um eine Achse parallel zur Längsachse drehbar angelenkt sind.

10. System nach einem der Ansprüche 7 bis 9,
wobei die Festhaltemittel dazu ausgelegt sind, den betreffenden Schienenabschnitt vertikal nach oben bis zu einer Anschlagfläche (88) zu verlagern, die zu dem Vertikalausrichtmodul (74) gehört.

11. System nach Anspruch 5 und einem der Ansprüche 6 bis 10,
wobei es zwei Vertikalausrichtmodule (74) umfasst, die in Längsrichtung auf beiden Seiten des Lateralausrichtmoduls (76) angeordnet sind.

12. Schweißmaschine (2) für Eisenbahnschienen mit einem System nach einem der vorhergehenden Ansprüche,
wobei sie ein Schweißmodul (98), vorzugsweise zum Verschweißen durch Induktionserwärmung, umfasst.

13. Schweißmaschine nach Anspruch 12,
wobei das Schweißmodul von einem dritten Rahmen getragen wird.

14. Schweißmaschine nach Anspruch 13,
wobei der dritte Rahmen (62) entlang der Längsachse (A) verschiebbar auf dem ersten Rahmen (14) gelagert ist.

15. Verfahren zur Verwendung der Schweißmaschine nach Anspruch 13 oder 14, umfassend die folgenden Schritte:
a) Anordnen der Schweißmaschine (2) über einem ersten Schienenabschnitt und einem zweiten Schienenabschnitt, deren Enden einander gegenüberliegen,
b) Ansteuern der ersten Spannmittel (30) zum Verspannen des ersten Schienenabschnitts, um eine Spannstellung des ersten Schienenabschnitts zu bewirken;
c) Ansteuern der Ausrichtmittel (68) zum Ausrichten des ersten Schienenabschnitts, um seine Achse mit der Längsachse auszurichten;
d) Ansteuern der zweiten Spannmittel (32) zum Verspannen des zweiten Schienenabschnitts, um eine Spannstellung des zweiten Schienenabschnitts zu bewirken;
e) Ansteuern der Ausrichtmittel (70) zum Ausrichten des zweiten Schienenabschnitts, um seine Achse mit der Längsachse auszurichten;
f) Ansteuern der Andrückmittel zum Aneinanderdrücken der Enden der Schienenabschnitte.

## Claims

1. System intended to be used for welding an end of a first rail portion with an end of a second rail portion, the first rail portion extending along a first axis and the second rail portion extending along a second axis, the system comprising:
- a first frame (14) and a second frame (16);
- means for sliding connection of the first frame (14) with the second frame (16) along a longitudinal axis (A) of extension of said two rail portions according to which the first axis and the second axis are intended to be aligned with one another and with the longitudinal axis (A);
- first clamping means (30) for clamping the first rail portion carried by the first frame (14) and configured to establish at least one free position and at least one clamping position of the first rail portion;
- second clamping means (32) for clamping the second rail portion carried by the second frame (16) and configured to establish at least one free position and at least one clamping position of the second rail portion;
- means for urging the ends of the rail portions one against the other,
- first alignment means (68) for aligning the first axis of the first rail portion along the longitudinal axis carried by the first frame (14) and second alignment means (70) for aligning the second axis of the second rail portion along the longitudinal axis carried by the second frame (16).
**characterised in that** the urging means are connected to the first frame (14) by means of the first clamping means (30) and to the second frame (16) by means of the second clamping means (32) so that the actuation of the urging means causes a clamping of the first rail portion by the first clamping means (30) and a clamping of the second rail portion by the second clamping means (32), and comprising a first linear actuator (40) and a second linear actuator (42) each connected to the first clamping means (30) and to the second clamping means (32), and **in that**:
- the first clamping means (30) comprise a first jaw (34a) and a second jaw (34b) both rotatably articulated on the first frame (14) and connected to the urging means, the first jaw (34a) and the second jaw (34b) being coupled in rotation with one another by means of first synchronising means (56) of the rotational speed of said jaws (34a, 34b),
- the second clamping means (32) comprise a third jaw (36a) and a fourth jaw (36b) rotatably articulated on the second frame (16) and connected to the urging means, the third jaw (36a) and the fourth jaw (36b) being rotatably coupled to one another by means of second synchronising means (60) of the rotational speed of said jaws (36a, 36b),
- the first jaw (34a) is rotatably articulated on a first end of the first linear actuator (40),
- the second jaw (34b) is rotatably articulated on a first end of the second linear actuator (42),
- the third jaw (36a) is rotatably articulated on a second end of the first linear actuator (40),
- the fourth jaw (36b) is rotatably articulated on a second end of the second linear actuator (42).

2. System according to claim 1, wherein the first and second jaws (34a, 34b) are connected to a first clamping actuator (52) configured to establish the free position and a pre-clamping position of the first clamping means (30).

3. System according to one of claims 1 or 2, wherein the third and fourth jaws (36a, 36b) are connected to a second clamping actuator (54) configured to establish the free position and a pre-clamping position of the second clamping means (32).

4. System according to one of the preceding claims, wherein the sliding connection is implemented by means of a slide device (26) comprising at least two first longitudinal arms (28a, 28b) belonging to the first frame (14) and capable of sliding in at least two second longitudinal arms (20a, 20b) belonging to the second frame (16).

5. System according to one of the preceding claims, wherein the first alignment means (68) of the first axis of the first rail portion and the second alignment means (70) of the second axis of the second rail portion each comprise a lateral alignment module (76) of the axis of the rail portion in question with the longitudinal axis (A).

6. System according to one of the preceding claims, wherein the first alignment means (68) of the first axis of the first rail portion and the second alignment means (70) of the second axis of the second rail portion each comprise a vertical alignment module (74) of the axis of the rail portion in question with the longitudinal axis (A).

7. System according to claim 5 or claims 5 and 6, wherein each lateral alignment module (74) comprises hooking means capable of hooking the lower portion of the head of the rail portion in question so as to laterally position the axis of the rail portion along the longitudinal axis (A).

8. System according to claim 7, wherein the hooking means comprise a pair of jaws (78a, 78b) configured to simultaneously hook the portion of rail in question on either side of the rail head.

9. System according to claim 8, wherein the jaws (78a, 78b) are each rotatably articulated about an axis parallel to the longitudinal axis.

10. System according to one of claims 7 to 9, wherein the hooking means are configured to vertically move the portion of rail in question upwards to a stop surface (88) belonging to the vertical alignment module (74).

11. System according to claim 5 and one of claims 6 to 10, wherein it comprises two vertical alignment modules (74) arranged longitudinally on either side of the lateral alignment module (76).

12. Railway rail welder (2) comprising a system according to one of the preceding claims, wherein it comprises a welding module (98), preferably by induction heating.

13. Welder according to claim 12, wherein a third frame carries the welding module.

14. Welder according to claim 13, wherein the third frame (62) is slidably mounted on the first frame (14) along the longitudinal axis (A).

15. Method for using
the welder according to claim 13 or 14 comprising the following steps:
a) Arranging the welder (2) above a first rail portion and a second rail portion with the ends facing each other,
b) Controlling the first clamping means (30) of the first rail portion to establish a clamping position of the first rail portion;
c) Controlling the alignment means (68) of the first rail portion to align its axis with the longitudinal axis;
d) Controlling the second clamping means (32) of the second rail portion to establish a clamping position of the second rail portion;
e) Controlling the alignment means (70) of the second rail portion to align its axis with the longitudinal axis;
f) Controlling the means for urging the ends of the rail portion one against the other.
